(19) Europäisches Patentamt

European Patent Office

Office européen des brevets

(11) Veröffentlichungsnummer: **0 485 692 A1**

# (12) EUROPÄISCHE PATENTANMELDUNG

(21) Anmeldenummer: **91111792.7**

(22) Anmeldetag: **15.07.91**

(51) Int. Cl.5: **B21H 8/00**, B21H 8/02, F16J 15/06, B29C 59/04, B29C 59/00, B29C 33/38

(30) Priorität: **15.11.90 DE 4036439**
**11.04.91 DE 4111791**
**14.11.90 DE 4036255**

(43) Veröffentlichungstag der Anmeldung:
**20.05.92 Patentblatt 92/21**

(84) Benannte Vertragsstaaten:
**AT BE CH DE DK ES FR GB GR IT LI LU NL SE**

(71) Anmelder: **Stecher, Friedhelm**
**Lohrstr. 72**
**W-5090 Leverkusen-Hitdorf(DE)**

(72) Erfinder: **Stecher, Friedhelm**
**Lohrstrasse 72**
**W-5090 Leverkusen-Hitdorf(DE)**
Erfinder: **Friedrichs, Gerd K.**
**Lützenkirchener Strasse 190**
**W-5090 Leverkusen(DE)**

(74) Vertreter: **Weber, Otto Ernst, Dipl.-Phys. et al**
**Weber & Heim Hofbrunnstrasse 36**
**W-8000 München 71(DE)**

(54) **Herstellungsverfahren für eine Flachdichtung und Werkzeug zur Durchführung des Verfahrens.**

(57) Es wird ein Herstellungsverfahren für eine Flachdichtung beschrieben, bei welcher zumindest einseitig an mindestens allen im Einsatzfall tragenden Stellen vor dem Einbau eine zur Durchbiegung der abzudichtenden Flächen komplementäre dreidimensionale Dichtfläche bleibend ausgeformt ist, sowie ein Werkzeug zur Durchführung des Verfahrens. Es wird ein Einbaumuster in der Weise hergestellt, daß ein plastisch verformbarer Werkstoff zwischen die abzudichtenden Flächen eingespannt wird. Eine Negativkopie des Einbaumusters wird auf der Mantelfläche erzeugt und die Dichtung wird unter Abrollen der Prägewalze hergestellt.

Fig. 5

Rank Xerox (UK) Business Services
(-/2.19/2.0)

Die Erfindung betrifft ein Herstellungsverfahren für eine Flachdichtung, bei welcher zumindest einseitig an mindestens allen im Einsatzfall tragenden Stellen vor dem Einbau eine zur Durchbiegung der abzudichtenden Flächen komplementäre dreidimensionale Dichtfläche bleibend ausgeformt ist, sowie ein Werkzeug zur Durchführung des Verfahrens.

Bekanntlich benötigen Flachdichtungen, insbesondere Zylinderkopfdichtungen, an den Dichtstellen eine bestimmte Flächenpressung, damit sie ihre Funktion erfüllen können. Bei größeren Dichtflächen, wie beispielsweise zwischen einem Zylinderkopf und einem Zylinderblock von Verbrennungsmotoren, wird diese Flächenpressung mit Hilfe von Schrauben erzeugt, wobei die Kräfte gezielt über die Fläche verteilt werden müssen.

Bekannte Flachdichtungen bestehen aus einem beim Einbau dickenverformbaren Material oder sind aus dickenverformbaren Elementen zusammengesetzt. Als nachteilig kann hierbei bezeichnet werden, daß diese Dichtungen beim Einbau oder bei bestimmten Betriebszuständen irreversibel verformt werden, so daß anschließend die Dichtwirkung eingeschränkt ist.

Andere, bisher nicht veröffentlichte Flachdichtungen werden im Unterschied dazu bereits bei der Herstellung bleibend mit der für den Anwendungsfall richtigen Dickenverteilung versehen. Sie weisen zumindest an allen tragenden Stellen eine für die notwendige Pressungsverteilung erforderliche Topographie bereits vor dem Einbau auf. Die Schraubenkräfte werden somit gezielt auf die tragenden und damit abzudichtenden Flächen verteilt.

Der Erfindung liegt die Aufgabe zugrunde, ein Herstellungsverfahren für die eingangs genannten Dichtungen sowie ein Werkzeug hierzu anzugeben. Diese Aufgabe wird verfahrensmäßig gemäß Anspruch 1 und bezüglich des Werkzeugs gemäß Anspruch 8 gelöst.

Eine bevorzugte Weiterbildung umfaßt folgende Verfahrensschritte:

a) Herstellen eines Einbaumusters in der Weise, daß ein plastisch verformbarer Werkstoff zwischen die abzudichtenden Flächen eingespannt wird,

b) Kopieren der Topographie des Einbaumusters dadurch, daß es mit einem Dickenmeßgerat abgetastet und die Meßdaten in einer Datenverarbeitungseinrichtung abgespeichert werden,

c) Erstellen einer gegebenenfalls korrigierten oder unter Berücksichtigung von Betriebs- und Materialparametern der Dichtflächen modifizierte Topographie in der Datenverarbeitungseinrichtung aufgrund der Meßwerte,

d) Herstellung einer Negativform der Topographie mittels eines werkstoffabhebenden Verfahrens auf der Außenfläche einer Prägewalze unter Steuerung der Datenverarbeitungseinrichtung, und

e) Prägung der Topographie unter Abrollen der Prägewalze.

Die Erfindung hat den Vorteil, daß auf das zu prägende Material eine Linienpressung ausgeübt wird, so daß relativ kleine Umformkräfte auftreten. Durch die Bewegung der Walze über dem Dichtungsmaterial wird eine Umformung der bereits profilierten Oberfläche durch das momentan verformte Material verhindert.

Eine bevorzugte Weiterbildung der Erfindung besteht darin, daß der Walzenumfang der Dichtungslänge entspricht und die Topographie der Dichtung vollständig aufweist.

Alternativ dazu kann es vorteilhaft sein, daß eine vorgegebene Topographie mehrmals nacheinander auf dem Umfang verteilt ist und daß durch eine einzige Walzenumdrehung eine Dichtungsseite vollständig ausgeformt wird. Es wird hierbei durch einfaches Abrollen der Walze die entsprechende Topographie abschnittsweise wiederholt, was bei Dichtungen für Motoren mit mehreren Zylindern die Herstellung vereinfachen kann.

Eine von unerwünschten Umformungen und Materialflüssen freie Dichtung erhält man dadurch, daß der Prägewalze unter Bildung eines Ziehkanals eine Gegenwalze gegenüberliegt.

Zur Herstellung einer auf zwei Seiten mit einer Topographie versehenen Dichtung ist es besonders vorteilhaft, daß zwei entsprechend profilierte Walzen unter Bildung des Ziehkanals achsparallel nebeneinander angeordnet sind. Es kann zweckmäßig sein, daß die zur Verformung vorgesehenen Bereiche durch eine Vorbehandlung mechanisch oder thermisch örtlich gezielt geschwächt werden.

Nach einer anderen Weiterbildung der Erfindung wird die Prägung in einem Zustand der leichten Verformbarkeit des Dichtungsmaterials durchgeführt und das Material anschließend gehärtet.

Sehr genaue Dichtflächen werden dadurch erreicht, daß der Prägevorgang in zwei Schritten durchgeführt wird. Man erzeugt zunächst eine Vorprägung und anschließend prägt man die endgültige Topographie ein.

Eine bevorzugte Weiterbildung des Herstellungsverfahrens besteht darin, daß beim Kopieren unter Berücksichtigung von motorspezifischen und/oder unterschiedlichen Betriebszuständen Veränderungen der Topographie vorgenommen werden.

Man kann die Topographie auf diese Weise erforderlichenfalls korrigieren oder vorgegebene Bereiche gezielt be- oder entlasten. Beispielsweise werden bei der Herstellung eines Einbaumusters die Stege zwischen zwei Brennraumdurchtrittsöffnungen geringer belastet als die vergleichbaren Außenränder. Entsprechend weist das Einbaumuster in diesen Außenbereichen eine geringere Dikke auf. Andererseits hat dies einen unerwünschten Verzug des Zylinderkopfes zur Folge. Korrigiert man diese unerwünschten Verformungen beim Kopieren, so hat dies den Vorteil, daß der Zylinderkopf nicht so stark verzogen wird.

Es kann ferner zweckmäßig sein, daß das Einbaumuster unter unterschiedlichen Betriebszuständen der abzudichtenden Flächen hergestellt, ausgewertet und die ermittelten Meßdaten zum Erstellen einer Topographie miteinander verrechnet werden, um diese unter Berücksichtigung der unterschiedlichen Betriebszustände optimal anzupassen.

Die Standfestigkeit wird dadurch optimiert, daß die Flachdichtung bei der Herstellung mit Verformungskräften geprägt wird, die größer sind als die im Betrieb auftretenden Anpreßdrucke.

Zusätzlich oder alternativ zu den vorstehenden Verfahrensschritten kann es auch vorteilhaft sein, daß das Ausgangsmaterial beispielsweise thermisch oder chemisch in einen Zustand der leichten Verformbarkeit versetzt und das Material nach der Ausformung gehärtet wird.

Eine andere bevorzugte Weiterbildung des Herstellungsverfahrens besteht darin, daß in einem plattenförmigen Ausgangsmaterial zunächst örtlich unterschiedlich durch Einprägen und gleichzeitigem Herauswachsen einer vorgegebenen Topographie eine im Vergleich zur späteren Dickenverteilung umgekehrte Hülldickenverteilung erreicht wird, und daß schließlich die endgültige Form ohne seitliches Fließen des Materials eingedrückt wird.

Es erweist sich ferner als zweckmäßig, daß die zur Abdichtung bestimmten tragenden Flächenbereiche durch unmittelbar benachbarte eingeprägte Vertiefungen aus einer ursprünglich gleichmäßig dicken Ausgangsplatte hervorgehoben werden.

Die Dichtung kann mit besonders wenigen Arbeitsschritten daduch hergestellt werden, daß die hervortretenden tragenden Flächenbereiche die endgültig Dickenverteilung bereits bei der Prägung der benachbarten Vertiefungen durch eine Materialverschiebung erhalten.

Es erweist sich als vorteilhaft, daß eine Erhebung durch eine Einprägung auf benachbarten Seiten hergestellt wird.

Ferner kann es vorteilhaft sein, daß die Einprägungen in Bereichen vorgenommen werden, welche in einem nachfolgenden Verfahrensschritt zur Erzeugung von Öffnungen ausgestanzt werden.

Nachfolgend wird die Erfindung anhand von zwei in der Zeichnung veranschaulichten Beispielen weiter verdeutlicht.

Fig. 1      zeigt schematisch eine Teil-Draufsicht auf eine Flachdichtung;

Fig. 2      zeigt schematisch einen Vertikal-Querschnitt durch die Flachdichtung gemäß Fig. 1 entlang der Schnittlinie A-A;

Fig. 3      zeigt schematisch einen Vertikal-Querschnitt durch die Flachdichtung gemäß Fig. 1 entlang einer Schnittlinie B-B;

Fig. 4      zeigt schematisch einen Vertikal-Querschnitt durch die Flachdichtung gemäß Fig. 1 entlang der Schnittlinie C-C; und

Fig. 5 bis 8      zeigen schematisch Seitenansichten von Prägevorrichtungen.

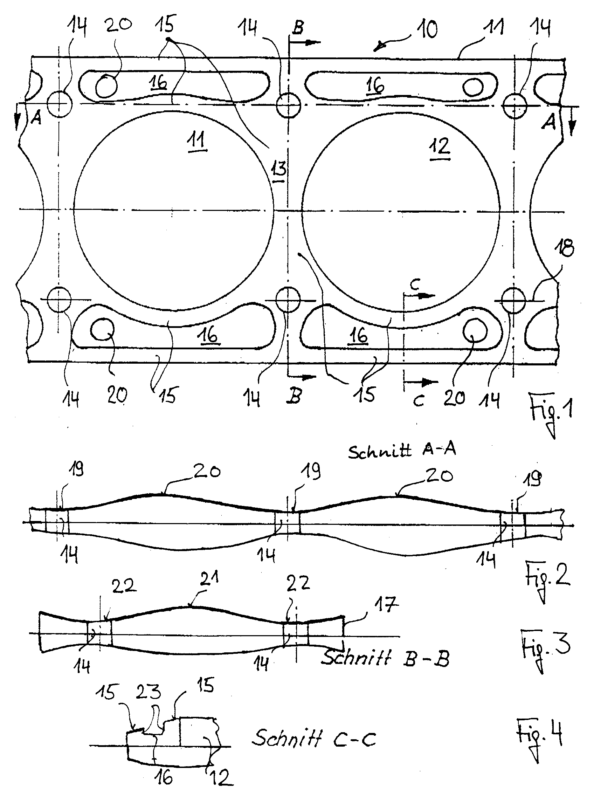

Die in Fig. 1 veranschaulichte Zylinderkopfdichtung 10 besteht aus einer Dichtungsplatte 11 aus einem Werkstoff, der im Einbauzustand und unter Betriebsbedingungen druckfest und nicht dikkenverformbar ist, beispielsweise Aluminium oder hitzebeständigem Kunststoff. Sie weist auf der Ober- und Unterseite aus der Zeichenebene heraustretende topographische Oberflächen auf, die nachfolgend noch näher beschrieben werden. Der abgebildete Abschnitt der Dichtungsplatte 11 ist mit zwei nebeneinanderliegenden Brennraumdurchtrittsöffnungen 11,12 versehen, zwischen welchen ein Steg 13 verläuft. Ferner sind Öffnungen 14 vorhanden, welche im eingebauten Zustand zwischen einem Zylinderkopf und einem Zylinderblock eines Verbrennungsmotors (nicht dargestellt) die Schrauben aufnehmen, mit welchen die Dichtflächen verpreßt werden.

Die Zylinderkopfdichtung hat tragende und somit abdichtende Bereiche 15 sowie in diesen inselartig verteilte nicht tragende Bereiche 16. Die Verteilung der tragenden und nicht tragenden Bereiche 15,16 wird durch die Verteilung der Brennraumdurchtrittsöffnungen 11,12, der der nichttragend Bereiche 16 mit Öffnungen 20 und der Schraubenöffnung 14 bestimmt. Tragende Bereiche 15 sind in jedem Fall ununterbrochen um die Brennraumdurchtrittsöffnungen 11,12 herum und ferner entlang den Plattenrändern vorhanden. Die nichttragenden Bereiche 16 liegen zwischen den randseitigen tragenden Bereichen 15 und einer (gedachten) Linie 18, die parallel zu den Plattenrändern durch die Mittelpunkte der diesem Plattenrand zugeordneten Schraubenöffnungen 14 verläuft.

In den nichttragenden Bereichen 16 sind die Öffnungen 20 für Wasser- und Ölableitungen oder ähnliches ausgestanzt.

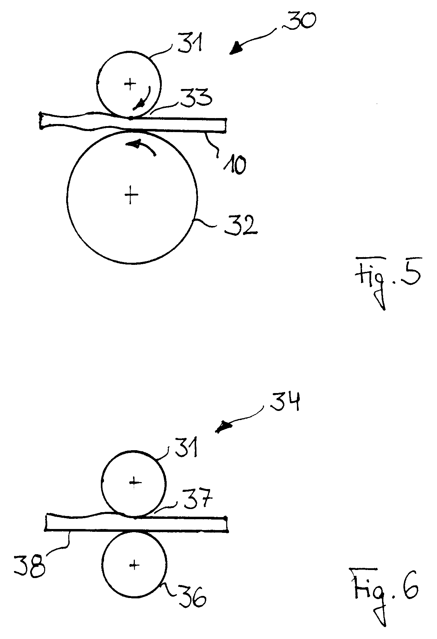

Der Vertikalquerschnitt entlang der Schnittlinie A-A gemäß Fig. 2 zeigt die Topographie der Zylinderkopfdichtung 10 parallel zu den Plattenrändern in einer der Linien 18 in einem tragenden Bereich 15. Die Dickenverteilung ist bereits vor dem Einbau in der Weise bleibend vorgegeben, daß der Oberflächenverlauf im Hinblick auf die im eingebauten Zustand notwendige Pressungsverteilung ausgeformt ist. Entsprechend ist im Bereich der Schraubenöffnungen 14 die geringste Dicke vorhanden. Von diesem Tiefpunkt 19 steigt die Dicke kontinuierlich bis zu einem Maximum 20 in der Mitte zwischen zwei Schraubenöffnungen 14 an. Diese Kurve entspricht im wesentlichen der Biegelinie eines Zylinderkopfes im verschraubten Zustand. Die unveränderbar fest vorgegebene Einbaudicke ist somit genau auf den bei der Verschraubung von Zylinderkopf und Zylinderblock entstehenden Hohlraum hin ausgeformt. Im vorliegenden Beispiel sind die Topographien der Ober- und Unterseite unterschiedlich.

Der Vertikalschnitt gemäß Schnittlinie B-B in Fig. 3, der quer durch den Steg 13 und zwei Schraubenöffnungen 14 verläuft, zeigt, daß die Zylinderkopfdichtung 10 auch in Querrichtung bereits vor dem Einbau bleibend topographisch ausgeformt ist. Die Oberflächenlinie hat ein Maximum 21 in der Mitte zwischen den Schraubenöffnungen 14 und Minima im Bereich der Schraubenöffnungen 14. Zu den Plattenrändern 17 hin nimmt die Dicke wieder kontinuierlich zu. Der auch im übrigen kontinuierliche Verlauf der Oberflächenverformung entspricht wiederum im wesentlichen der entsprechenden Biegungslinie des zugehörigen Zylinderkopfes und der Verformungen der Blockdichtfläche im eingebauten Zustand.

Fig. 4 zeigt anhand der Schnittlinie C-C, daß die nichttragenden Bereiche 16 unter Bildung von Stufen 23 von der ansonsten kontinuierlich verlaufenden Oberfläche der tragenden Bereiche 15 abgesenkt sind.

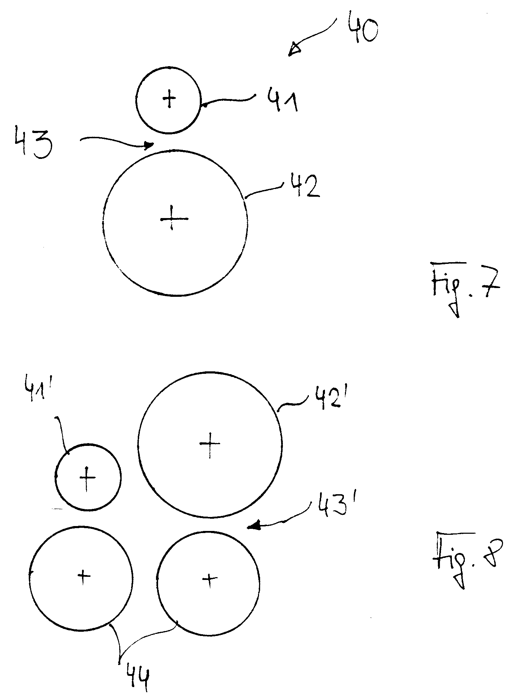

Die vorstehend beschriebene Zylinderkopfdichtung 10 wird mit einer in Fig. 5 dargestellten Prägevorrichtung 30 hergestellt. Sie weist eine Prägewalze 31 (Prägekalander) sowie eine achsparallel dazu angeordnete weitere Prägewalze 32 auf. Zwischen beiden Prägewalzen 31,32 befindet sich ein Ziehkanal 33, der auf die genaue Dicke der Zylinderkopfdichtung 10 kalibriert ist.

Auf den Mantelflächen der beiden Prägewalzen 31,32 ist die Topographie der Oberseite bzw. der Unterseite der Zylinderkopfdichtung 10 als Negativform ausgebildet, so daß die entsprechenden Oberflächen beim Durchlaufen des Ziehkanals 33 in das Dichtungsmaterial eingeprägt werden. Der Prägedruck ist hierbei so groß, daß die Verformungskräfte größer sind als die im Einbauzustand der Zylinderkopfdichtung 10 auftretenden Anpreßdrucke.

Beim Durchlauf durch den Ziehkanal 23 erfolgt aufgrund des Walzendrucks ein Materialfluß allenfalls vor dem Ziehkanal und nach der Prägung findet keine weitere Beeinflussung oder Verformung der Topographie, insbesondere kein Materialfluß, statt.

Für bestimmte Materialien kann es vorteilhaft sein, daß dieser Prägevorgang in zwei Schritten vorgenommen wird. In einer ersten Phase wird ein an die endgültige Topographie angenähertes Profil geprägt. Nach dieser Vorformung erfolgt in einer zweiten Phase die endgültige Formgebung. Die zugehörigen Prägewalzenpaare können hierbei unmittelbar hintereinander geschaltet sein.

Bei Zylinderkopfdichtungen, die entlang ihrer Längsachse Abschnitte mit gleicher Topographie aufweisen, wie beispielsweise in Fig. 1 die Längsabschnitte zwischen zwei benachbarten Schraubenlöchern, entspricht der Walzenumfang der Länge eines derartigen Abschnitts. Auf der Mantelfläche ist entsprechend die zugehörige Topographie dieses Abschnitts vorhanden. Bei jeder vollen Walzendrehung wird somit ein entsprechender Längenabschnitt der Zylinderkopfdichtung geprägt und bei jeder weiteren Umdrehung erfolgt eine Wiederholung der Topographie.

Unterscheiden sich benachbarte Längsabschnitte, beispielsweise wie die Dichtungsunterseite gemäß Fig. 2, enthält die zugehörige Prägewalze 32 die vollständige Topographie dieser Dichtungsseite. Diese Seite wird hierbei bei einer einzigen vollständigen Walzenumdrehung geprägt.

Nach dem Prägevorgang werden alle Brennraumdurchtrittsöffnungen 11,12, Schraubenlöcher 14 und weiteren Öffnungen 20 ausgestanzt. Falls Mikrodichteigenschaften erforderlich sind, wird die Dichtung anschließend in einer Oberflächennachbehandlung mit Kunststoff oder Lack in der Weise beschichtet, daß ein Rauhtiefenausgleich erfolgt.

Bei dem in Fig. 6 dargestellten Beispiel einer weiteren Prägevorrichtung 34 liegt einer Prägewalze 35 eine unprofilierte Gegenwalze 36 unter Bildung eines Ziehkanals 37 gegenüber. Entsprechend erfolgt die Herstellung der Topographie auf einer Flachdichtung 38 lediglich einseitig.

Figur 7 veranschaulicht ein Beispiel einer dritten Prägevorrichtung 40 mit einer ersten Prägewalze 41, welcher eine zweite Prägewalze 42 mit größerem Durchmesser unter Bildung des Ziehkanals 43 gegenüberliegt. Auf der ersten Prägewalze 41 ist ein sich periodisch wiederholender Bereich einer Topographie ausgeformt. Für die Herstellung einer Zylinderkopfdichtung für einen Vierzylindermotor würde ihr Umfang einem Viertel der Dichtungslänge entsprechen. Durch eine viermalige Umdrehung würde der auf der Walzenfläche enthaltende Topographieabschnitt entsprechend viermal periodisch in das Dichtungsmaterial eingeprägt.

Die zweite Prägewalze weist einen Umfang auf, welcher der Gesamtlänge der herzustellenden Dichtung entspricht, so daß der Prägevorgang bei einer einzigen Umdrehung erfolgt. Die auf der Mantelfläche der zweiten Prägewalze 42 enthaltene Topographie enthält ein sich nicht wiederholendes Prägemuster. In dem vorerwähnten Beispiel einer Zylinderkopfdichtung für einen Vierzylindermotor entspräche der Umfang der zweiten Prägewalze 42 dem vierfachen Umfang der ersten Prägewalze 41 und es könnten beispielsweise die Stege an den Rändern anders ausgeformt sein, als die innenliegenden Stege. Sollen sie eine größere Dicke aufweisen, würde die zweite Prägewalze 42 entsprechende Ausnehmungen aufweisen.

Das Beispiel einer vierten Prägevorrichtung gemäß Figur 8 unterscheidet sich von dem Beispiel nach Figur 7 dadurch, daß die erste und zweite Prägewalze 41', 42' auf der gleichen Seite des Ziehkanals 43' angeordnet sind und daß den beiden Prägewalzen 41', 42' Gegenwalzen 44 zugeordnet sind. Beim Prägevorgang wird eine sich periodisch wiederholende Topographie unter Überlagerung einer sich nicht periodisch wiederholenden Topographie hergestellt.

**Patentansprüche**

1. Herstellungsverfahren für eine Flachdichtung, bei welcher zumindest einseitig an mindestens allen im Einsatzfall tragenden Stellen vor dem Einbau eine zur Durchbiegung der abzudichtenden Flächen komplementäre dreidimensionale Dichtfläche bleibend ausgeformt ist, dadurch **gekennzeichnet,** daß eine Negativform der Topographie mittels eines werkstoffabhebenden Verfahrens auf der Außenfläche mindestens einer Prägewalze (31,35) hergestellt wird, und daß die Topographie unter Abrollen der Prägewalzen (31,35) in das Dichtungsmaterial geprägt wird.

2. Verfahren nach Anspruch 1, dadurch **gekennzeichnet,** daß die Herstellung der Negativform unter Steuerung einer Datenverarbeitungseinrichtung erfolgt, und daß hierbei folgende Verfahrensschritte vorausgehen:
   a) Herstellen eines Einbaumusters in der Weise, daß ein plastisch verformbarer Werkstoff zwischen die abzudichtenden Flächen eingespannt wird,
   b) Kopieren der Topographie des Einbaumusters dadurch, daß es mit einem Dickenmeßgerät abgetastet und die Meßdaten in einer Datenverarbeitungseinrichtung abgespeichert werden, und
   c) Erstellen einer gegebenenfalls korrigierten oder unter Berücksichtigung von Betriebs- und Materialparametern der Dichtflächen modifizierten Topographie in der Datenverarbeitungseinrichtung aufgrund der Meßwerte.

3. Verfahren nach Anspruch 1 oder 2, dadurch **gekennzeichnet,** daß die Flachdichtung mit Verformungskräften geprägt wird, die größer sind als die im Einbauzustand und im späteren Betriebszustand auftretenden Anpreßdrucke.

4. Verfahren nach einem der vorhergehenden Ansprüche, dadurch **gekennzeichnet,** daß der Walzenumfang der Dichtungslänge entspricht und die Topographie der Dichtung vollständig aufweist.

5. Verfahren nach einem der Ansprüche 1 bis 3, dadurch **gekennzeichnet,** daß eine vorgegebene Topographie mehrmals nacheinander auf dem Umfang der Prägewalze (31,32) verteilt ist, und daß durch eine einzige Walzenumdrehung unter Wiederholung der Topographie eine Dichtungsseite vollständig ausgeformt wird.

6. Verfahren nach einem der vorhergehenden Ansprüche, dadurch **gekennzeichnet,** daß die Prägung in einem Zustand der leichten Verformbarkeit des Dichtungsmaterials durchgeführt und das Dichtungsmaterial anschließend gehärtet wird.

7. Verfahren nach einem der vorhergehenden Ansprüche, dadurch **gekennzeichnet,** daß der Prägevorgang in zwei Schritten durchgeführt wird, wobei zunächst eine Vorprägung erfolgt und anschließend die vollständige Topographie geprägt wird.

8. Werkzeug zur Durchführung des Verfahrens nach Anspruch 1, dadurch **gekennzeichnet,** daß auf der Mantelfläche einer Prägewalze (31,32) eine Topographie der Oberseite bzw. Unterseite einer Dichtung zumindest abschnittsweise als Negativform ausgebildet ist.

9. Werkzeug nach Anspruch 8, dadurch **gekennzeichnet,** daß die Topographie vollständig auf der Mantelfläche ausgeformt ist.

10. Werkzeug nach Anspruch 8 oder 9, dadurch **gekennzeichnet,** daß der Prägewalze (31) unter Bildung eines Ziehkanals (37) eine Gegenwalze (36) zugeordnet ist.

11. Werkzeug nach Anspruch 8 oder 9,
dadurch **gekennzeichnet,**
daß der Prägewalze (31) unter Bildung eines Ziehkanals (33) eine weitere Prägewalze (35) zugeordnet ist.

12. Werkzeug nach einem der Ansprüche 9 bis 11,
dadurch **gekennzeichnet,**
daß einer Prägewalze (41, 41') eine weitere Prägewalze (42, 42') größeren Durchmessers in der Weise zugeordnet ist, daß ein periodisch sich wiederholendes Prägemuster durch mehrmalige Drehung der Prägewalze (41, 41') mit kleinerem Durchmesser hergestellt wird, und ein sich nicht periodisch wiederholendes Prägemuster durch die weitere Prägewalze (42) hergestellt wird, wobei die weitere Prägewalze eine ihrem größeren Umfang entsprechend kleinere Umdrehung ausführt.

Fig. 1

Schnitt A-A

Fig. 2

Schnitt B-B

Fig. 3

Schnitt C-C

Fig. 4

Fig.5

Fig.6

40

41

43

42

Fig. 7

41'

42'

43'

44

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN vol. 9, no. 92 (M-373)(1815) 20. April 1985 & JP-A-59 217 060 ( ASAHI ISHIWATA ) 7. Dezember 1984 * Zusammenfassung * --- | 1 | B21H8/00 B21H8/02 F16J15/06 B29C59/04 B29C59/00 B29C33/38 |
| A | EP-A-0 079 263 (PROD. TEXTILES ET PLASTIQUES) * Zusammenfassung; Abbildungen * --- | 1,3,12 | |
| A | DE-C-505 468 (EISEN UND STAHLWERK HOESCH) * Anspruch 1; Abbildung * --- | 1,5 | |
| A | US-A-3 121 913 (HAGMANN ET AL.) * Anspruch 1; Abbildungen * ----- | 1 | |

| | RECHERCHIERTE SACHGEBIETE (Int. Cl.5) |
|---|---|
| | B21H F16J B29C |

Der vorliegende Recherchenbericht wurde für alle Patentansprüche erstellt

| Recherchenort | Abschlußdatum der Recherche | Prüfer |
|---|---|---|
| DEN HAAG | 30 JANUAR 1992 | NARMINIO A. |

EPO FORM 1503 03.82 (P0403)